# EUROPÄISCHE PATENTSCHRIFT

(11) **EP 0 940 290 B1**
(45) Veröffentlichungstag und Bekanntmachung des Hinweises auf die Patenterteilung: **07.01.2004**
(21) Anmeldenummer: 99101646.0
(22) Anmeldetag: 05.02.1999
(51) Int. Cl.: B60N 3/02, B60J 7/06, B60J 7/12

(54) **Fahrzeug mit Dachhaltegriff**
Vehicle with roof assist grip
Véhicule avec poignée de maintien fixée au toit

(30) Priorität: 05.03.1998 DE 19809448
(43) Veröffentlichungstag der Anmeldung: 08.09.1999
(73) Patentinhaber: Volkswagen Aktiengesellschaft, 38436 Wolfsburg (DE)
(72) Erfinder: Fischer, Gerd, 38124 Braunschweig (DE)

(56) Entgegenhaltungen:
- DE-A- 4 224 148
- DE-C- 807 474
- DE-C- 3 817 769
- DE-U- 29 707 036
- GB-A- 1 278 748
- PATENT ABSTRACTS OF JAPAN vol. 10, no. 238 (M-508), 16. August 1986 -& JP 61 071218 A (TAIYO KOGYO KK), 12. April 1986

## Beschreibung

Die Erfindung betrifft ein Fahrzeug, insbesondere ein Personenkraftfahrzeug mit einem Dachhaltegriff nach dem Oberbegriff des Anspruchs 1.

Bei Personenkraftfahrzeugen mit festen Fahrzeugdächern sind regelmäßig im Bereich der Sitzpositionen Dachhaltegriffe angebracht. Diese sind im Fahrzeuginnenraum an den seitlichen Dachlängsträgem befestigt. Solche Dachhaltegriffe sind nützliche Funktionsteile und dienen vorzugsweise als Ein- und Ausstieghilfen.

Es sind einfache Ausführungsformen von Dachhaltegriffen allgemein bekannt, bei denen lediglich ein Abschnitt eines Kunststoffbandes mit beiden Enden am Dachlängsträger so befestigt ist, daß sich das Kunststoffband als Griffteil in den Fahrzeuginnenbereich hinein wölbt.

In modernen Personenkraftfahrzeugen sind regelmäßig federbelastete, in Mulden der Innenverkleidung einschwenkbare Klappbügelgriffe als Dachhaltegriffe angebracht. Diese Klappbügelgriffe sind feste, stabile Teile, die aus Sicherheitsgründen bei der Nichtbenutzung in den zugeordneten Mulden versenkbar sind.

Bei Cabriofahrzeugen mit faltbaren Cabrioletdächern fehlt ein fester Dachaufbau mit ortsfesten seitlichen Dachlängsträgern. Somit fehlen hier die bekannte stabile Abstützbasis und die Befestigungsstellen für einen Dachhaltegriff. Zudem würden übliche Dachhaltegriffkonstruktionen ein kleinvolumiges Zusammenfalten eines Cabrioletdachs behindem und ggf. zu Beschädigungen führen. Daher sind bei Cabrioletfahrzeugen keine Dachhaltegriffe bekannt.

Aufgabe der Erfindung ist es, bei einem Fahrzeug als Cabriofahrzeug eine geeignete Anordnung und Ausbildung eines Dachhaltegriffs vorzuschlagen.
Diese Aufgabe wird mit den Merkmalen des Anspruchs 1 gelöst.

Gemäß Anspruch 1 weist das Fahrzeug ein öffenbares und faltbares Cabrioletdach auf. Der Dachhaltegriff umfaßt ein elastisch verformbares, zu beiden Seiten mit einer seitlichen Struktur des Cabrioletdachs an Griffteilbefestigungsstellen verbundenes Griffteil. Das Cabrioletdach ist beim Öffnen durch Faltungen in Dachquerwellen zusammenlegbar und in der Regel im Bereich des Fahrzeughecks ablegbar. Hinsichtlich des Dachhaltegriffs, ist es erforderlich, daß das Cabrioletdach beim Öffnen wenigstens zwischen den Griffteilbefestigungsstellen unter Verkleinerung deren Abstands zusammenschiebbar und in einer quer zur Fahrzeuglängsrichtung verlaufenden, zur Dachaußenseite sich aufwölbenden Dachquerwelle faltbar ist. Das elastische Griffteil ist beim Öffnen des Cabrioletdachs durch die gegeneinander führende Zwangsbewegung der Griffteilbefestigungsstellen in den Faltungsbereich der Dachwelle hinein von einer Gebrauchsstellung in eine aufgewölbte Nichtgebrauchsstellung verformbar und dort aufnehmbar.

Mit diesen Merkmalen wird erreicht, daß auch für Cabrioletdächer die Anbringung eines nützlichen Dachhaltegriffs möglich ist. Da sich beim Öffnen des Cabrioletdachs das Griffteil elastisch in den Faltungsbereich einer Dachquerwelle hinein verformt und dort aufnehmbar ist, stört das Griffteil die Dachauffaltung nicht und legt sich vorteilhaft kleinräumig mit dem aufgefalteten Dach zusammen. Durch die Griffteilelastizität besteht auch keine Gefahr einer Beschädigung der faltbaren Dachhaut. Zudem ist die Griffteileleastizität so dimensionierbar, daß bei einem Fahrzeugaufprall mit einem Kopfaufprall eines Insassen auf den Dachhaltegriff keine Verletzungsgefahr besteht. Bei einer geeigneten Ausbildung des Dachhaltegriffs mit geeigneter Elastizität kann dieser auch als passives Sicherheitselement für einen gedämpften Kopfaufprall herangezogen und ausgelegt werden.

Das Cabrioletdach kann vorteilhaft in bewährter Technik mit gelenkig verbundenen Längsgestängeteilen und/oder Querriegeln mit wenigstens einer darüber gespannten Stoffbahn als Dachhaut ausgeführt sein. Die Griffteilbefestigungsstellen sollen dabei vorzugsweise an Längsträgerteilen und/oder an Querriegeln liegen. Dadurch ergeben sich feste Abstützpunkte für den Dachhaltegriff mit guten Befestigungsmöglichkeiten sowie definierte Verhältnisse bei der Dachfaltung und Aufwölbung des Griffteils.

Hochwertige Cabrioletdächer sind zweilagig mit Stoffbahnen für eine Außenhaut und eine Innenhaut aufgebaut. Als Stoffmaterial werden insbesondere beschichtete Textilstoffe verwendet. Beim Öffnen des Cabrioletdachs werden sowohl die Außenhaut als auch die Innenhaut in gleicher Richtung gefaltet. Bei einer solchen Dachausbildung liegen das Griffteil und dessen Griffteilbefestigungsstellen unter der Innenhaut.

Um eine definiert vorgebbare Faltung und Aufwölbung des Griffteils mit geringem Kraftaufwand zu erreichen, wird vorgeschlagen, an den Griffteilbefestigungsstellen und/oder in wenigstens einem mittleren Bereich des Griffteils Gelenke anzubringen. Solche Gelenke können einfach und preiswert als Filmschamiere ausgebildet sein.

Der Abstand der Griffteilbefestigungsstellen soll bei geschlossenem Cabrioletdach vorzugsweise etwas geringer als die gestreckte Länge des Griffteils sein, so daß das elastische Griffteil in der Gebrauchsstellung eine in den Fahrzeuginnenraum weisende Bogenform hat. Dadurch kann das Griffteil in der Gebrauchsstellung gut erfaßt und umgriffen werden. Es ist jedoch auch denkbar, daß das Griffteil in der gerade gestreckten Länge angebracht ist und die Möglichkeit für ein Hintergreifen durch eine entsprechende Ausformung des angrenzenden Dachbereichs gegeben ist.

In einer besonders bevorzugten Weiterbildung sind die Gelenke bevorzugt als Filmscharniere und/oder das Griffteil so ausgelegt, daß Vorzugsverformungsrichtungen vorliegen. Solche Vorzugsverformungsrichtungen können in an sich bekannter Weise durch Einzelmaßnahmen oder Kombinationen in der Art von Materialverdünnungen, Anschlägen, Sickenformen, unterschiedliche Materialelastizitäten und Verbundwerkstoffe erreicht werden. Diese Vorzugsverformungsrichtungen sollen hier so wirken, daß sich beim Öffnen des Cabrioletdachs und einer damit verbundenen Aufwölbung des Griffteils eine ggf. ursprünglich in das Fahrzeuginnere weisende Bogenform des Griffteils in die andere Richtung zur Dachaußenseite hin für eine Aufwölbung in den Faltungsbereich der Dachquerwelle hinein ändert. Beim Schließen des Cabrioletdachs soll dagegen die ursprüngliche, ggf. in den Fahrzeuginnenraum weisende Bogenform für die Gebrauchsstellung wieder hergestellt werden. Dazu können auch an sich bekannte Schnappeffekte im Griffteil verwendet werden.

In einer kostengünstigen und funktionellen Ausführungsform des Griffteils kann dieses einfach flachbandartig ausgebildet sein, wobei für eine definierte und wenig kraftaufwendige Wölbung die Flachseiten in Wölbungsrichtung weisen.

Die für das Griffteil erforderliche Stabilität, Belastbarkeit und Elastizität werden vorzugsweise durch einen Aufbau mit einem Kern aus Nylongewebe und einer Kunststoffummantelung erreicht.

Anhand einer Zeichnung wird die Erfindung näher erläutert.

Es zeigen:
- Fig. 1: eine schematische Darstellung eines Frontbereichs eines Cabriofahrzeugs mit einem Dachhaltegriff,
- Fig. 2: eine schematische Darstellung eines Dachbereichs mit einem Dachhaltegriff in Gebrauchsstellung, und
- Fig. 3: eine schematische Darstellung eines zusammengeklappten Dachbereichs mit einem Dachhaltegriff in Nichtgebrauchsstellung.

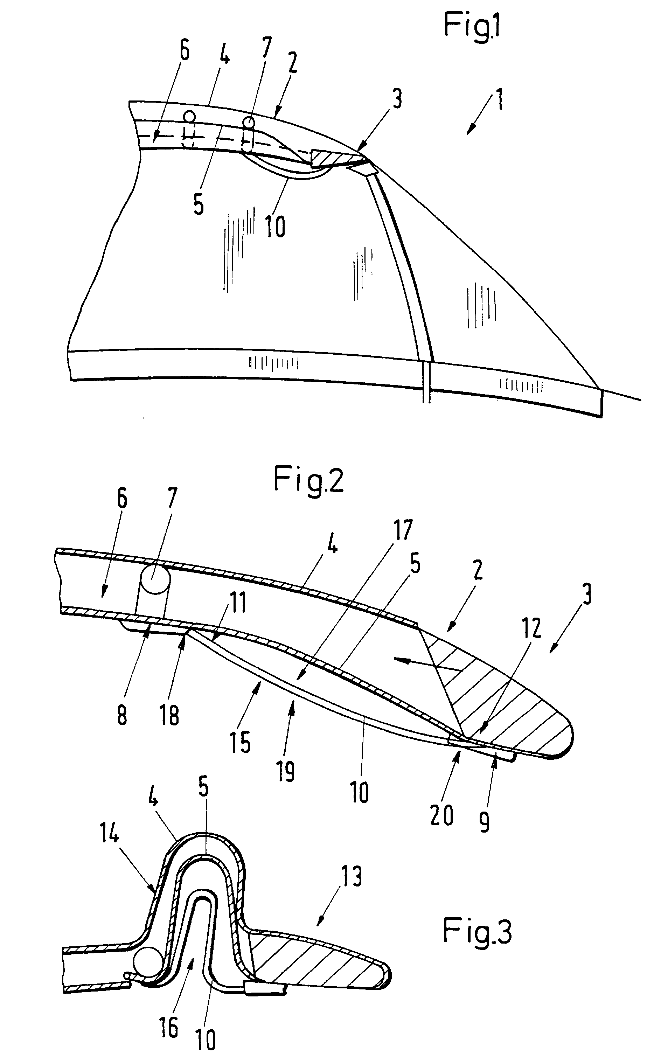

In der Fig. 1 ist schematisch ein Frontbereich eines Cabriolets 1 mit einem Cabrioletdach 2 in einer Geschlossenstellung 3 dargestellt. Wie dies insbesondere auch aus der Fig. 2 ersichtlich ist, ist das Cabrioletdach 2 zweilagig mit einer Außenhaut 4 und einer Innenhaut 5 ausgebildet.

Das Cabrioletdach 2 umfaßt weiter in an sich bekannter Weise gelenkig verbundene Längsgestängeteile 6 und Querriegel 7. Im Bereich der frontseitigen Längsgestängeteile 6 und Querriegel 7 sind Griffteilbefestigungsstellen 8, 9 ausgebildet, an denen ein elastisch verformbares, flachbandartig ausgebildetes Griffteil 10 mit jeweils einem Griffteilende 11, 12 befestigt ist. Wie dies aus den Fig. 1 und 2 ersichtlich ist, liegen sowohl das Griffteil 10 als auch dessen Griffteilbefestigungsstellen 8, 9 unter der Innenhaut 5 des Cabrioletdachs 2.

Das Griffteil 10 weist einen Aufbau mit einem Kern aus einem Nylongewebe und einer Kunststoffummantelung auf.

Wie dies aus den Fig. 1 und 2 weiter ersichtlich ist, ist der Abstand der Griffteilbefestigungsstellen 8, 9 bei geschlossenem Cabrioletdach 2 etwas geringer als die gestreckte Länge des Griffteils 10, so daß das Griffteil 10 in der Gebrauchsstellung 15 eine in den Fahrzeuginnenraum weisende Bogenform besitzt. Dadurch kann das Griffteil 10 in dieser Gebrauchsstellung 15 gut erfaßt und umgriffen werden.

Wie dies aus der Fig. 3 ersichtlich ist, ist das Cabrioletdach 2 beim Übergang von der in den Fig. 1 und 2 dargestellten Geschlossenstellung in eine Offenstellung 13 zwischen den Griffteilbefestigungsstellen 8, 9 unter Verkleinerung deren Abstands zusammenschiebbar und in einer quer zur Fahrzeuglängsrichtung verlaufenden, sich zur Dachaußenseite hin aufwölbenden Dachquerwelle 14 faltbar. Dabei wird das Griffteil 10 durch die gegeneinander führende Zwangsbewegung der Griffteilbefestigungsstellen 8, 9 in den Faltungsbereich der Dachquerwelle 14 hinein von der Gebrauchsstellung 15 in eine aufgewölbte Nichtgebrauchsstellung 16 verformt und dort aufgenommen.

Um diese definiert vorgebbare Faltung und Aufwölbung des Griffteils 10 sicherzustellen, sind an den Griffteilbefestigungsstellen 8, 9 und in einem mittleren Bereich 17 des Griffteils 10 Gelenke 18, 19, 20 als Filmscharniere ausgebildet. Dabei sind die Gelenke 18, 19, 20 so ausgelegt, daß Vorzugsverformungsrichtungen vorliegen. Dadurch wird erreicht, daß sich beim Öffnen des Cabrioletdachs 2 und einer damit verbundenen Aufwölbung des Griffteils 10 die ursprünglich in das Fahrzeuginnere weisende Bogenform des Griffteils 10 in die andere Richtung zur Dachaußenseite hin für eine Aufwölbung in den Faltungsbereich der Dachquerwelle 14 hinein ändert. Solche Vorzugsverformungsrichtungen werden beispielsweise durch Materialverdünnungen, Anschläge, Sickenformen, unterschiedliche Materialelastizitäten und Verbundwerkstoffe im Bereich der Gelenke 18, 19, 20 erreicht.

### BEZUGSZEICHENLISTE

- 1.: Fahrzeug
- 2.: Cabrioletdach
- 3.: Geschlossenstellung
- 4.: Außenhaut
- 5.: Innenhaut
- 6.: Längsgestängeteil
- 7.: Querriegel
- 8.: Griffteilbefestigungsstelle
- 9.: Griffteilbefestigungsstelle
- 10.: Griffteil
- 11.: Griffteilende
- 12.: Griffteilende
- 13.: Offenstellung
- 14.: Dachquerwelle
- 15.: Gebrauchsstellung
- 16.: Nichtgebrauchsstellung
- 17.: mittlerer Bereich
- 18.: Gelenke
- 19.: Gelenke
- 20.: Gelenke

## Patentansprüche

1. Fahrzeug mit Dachhaltegriff,
**dadurch gekennzeichnet,**
**daß** das Fahrzeug ein Fahrzeugdach als öffenbares und faltbares Cabrioletdach (2) aufweist, daß der Dachhaltegriff ein elastisch verformbares, zu beiden Seiten mit einer seitlichen Struktur des Cabrioletdachs an Griffteilbefestigungsstellen (8, 9) verbundenes Griffteil (10) umfaßt,
**daß** das Cabrioletdach (2) beim Öffnen wenigstens zwischen den Griffteilbefestigungsstellen (8, 9) unter Verkleinerung deren Abstands zusammenschiebbar und in einer quer zur Fahrzeuglängsrichtung verlaufenden, zur Dachaußenseite sich aufwölbenden Dachquerwelle (14) faltbar ist, und
**daß** das elastische Griffteil (10) beim Öffnen des Cabrioletdachs (2) durch die gegeneinander führende Zwangsbewegung der Griffteilbefestigungsstellen (8, 9) in den Faltungsbereich der Dachquerwelle (14) hinein von einer Gebrauchsstellung (15) in eine aufgewölbte Nichtgebrauchsstellung (16) verformbar und dort aufnehmbar ist.

2. Fahrzeug mit Dachhaltegriff nach Anspruch 1,
**dadurch gekennzeichnet,**
**daß** das Cabrioletdach (2) beabstandete, gelenkig verbundene Längsgestängeteile (6) und/oder Querriegel (7) aufweist, die mit wenigstens einer Stoffbahn als Dachhaut verbunden und abgedeckt sind, und
**daß** die Griffteilbefestigungsstellen (8, 9) an Längsgestängeteilen (6) und/oder an Querriegeln (7) liegen.

3. Fahrzeug mit Dachhaltegriff nach Anspruch 1 oder Anspruch 2,
**dadurch gekennzeichnet,**
**daß** das Cabrioletdach (2) zweilagig mit einer Außenhaut (4) und einer Innenhaut (5) ausgebildet ist und sich beim Öffnen des Cabrioletdachs (2) sowohl die Außenhaut (4) als auch die Innenhaut (5) faltet, und
**daß** das Griffteil (10) und dessen Griffteilbefestigungsstellen (8, 9) unter der Innenhaut (5) liegen.

4. Fahrzeug mit Dachhaltegriff nach einem der Ansprüche 1 bis 3,
**dadurch gekennzeichnet,**
**daß** an den Griffteilbefestigungsstellen (8, 9) und/oder in wenigstens einem mittleren Bereich (17) des Griffteils (10) Gelenke (18, 19, 20), bevorzugt als Filmscharniere vorgesehen sind.

5. Fahrzeug mit Dachhaltegriff nach Anspruch 4,
**dadurch gekennzeichnet,**
**daß** der Abstand der Griffteilbefestigungsstellen (8, 9) bei geschlossenem Cabrioletdach (2) etwas geringer ist als die gestreckte Länge des Griffteils (10), so daß das Griffteil (10) in der Gebrauchsstellung (15) eine in den Fahrzeuginnenraum weisende Bogenform hat.

6. Fahrzeug mit Dachhaltegriff nach Anspruch 4 oder Anspruch 5,
**dadurch gekennzeichnet,**
**daß** die Gelenke (18, 19, 20) bevorzugt als Filmscharniere und/oder das Griffteil (10) durch das Vorsehen von Vorzugsverformungsrichtungen so ausgelegt sind, daß sich beim Öffnen des Cabrioletdachs (2) und einer damit verbundenen Aufwölbung des Griffteils (10) in jedem Fall eine Bogenform in Richtung zur Dachaußenseite hin für eine Aufwölbung in den Faltungsbereich der Dachquerwelle (14) ausgebildet wird und
**daß** sich beim Schließen des Cabrioletdachs (2) die gegebenenfalls ursprüngliche Bogenform der Gebrauchsstellung (15) wieder einstellt.

7. Fahrzeug mit Dachhaltegriff nach einem der Ansprüche 1 bis 6,
**dadurch gekennzeichnet,**
**daß** das Griffteil (10) flachbandartig ausgebildet ist, wobei die Flachseiten in Wölbrichtung weisen.

8. Fahrzeug mit Dachhaltegriff nach einem der Ansprüche 1 bis 7,
**dadurch gekennzeichnet,**
**daß** das Griffteil (10) einen Kern aus Nylongewebe aufweist, der kunststoffummantelt ist.

## Claims

1. Vehicle with a roof grab handle, **characterized in that** the vehicle has a vehicle roof in the form of a cabriolet roof (2) which can be opened and folded, **in that** the roof grab handle comprises an elastically deformable handle part (10) which is connected on both sides to a lateral structure of the cabriolet roof at handle-part fastening points (8, 9), **in that**, during opening, the cabriolet roof (2) can be pushed together at least between the handle-part fastening points (8, 9) reducing the distance between them, and can be folded in a roof crossway (14) which runs transversely with respect to the longitudinal direction of the vehicle and curves to the outside of the roof, and **in that**, during opening of the cabriolet roof (2), the elastic handle part (10) can be formed by the forced movement of the handle-part fastening points (8, 9) towards each other into the folding region of the roof crossway (14) from an operative position (15) into a curved inoperative position (16) and can be held there.

2. Vehicle with a roof grab handle according to Claim 1, **characterized in that** the cabriolet roof (2) has spaced-apart longitudinal linkage parts (6) and/or crossbars (7) which are connected in an articulated manner, are connected to at least one fabric web in the form of a roof skin and are covered, and **in that** the handle-part fastening points (8, 9) are situated on longitudinal linkage parts (6) and/or on crossbars (7).

3. Vehicle with a roof grab handle according to Claim 1 or Claim 2, **characterized in that** the cabriolet roof (2) is formed in two layers with an outer skin (4) and an inner skin (5) and, when the cabriolet roof (2) is opened, both the outer skin (4) and the inner skin (5) are folded, and **in that** the handle part (10) and its handle-part fastening points (8, 9) are situated below the inner skin (5).

4. Vehicle with a roof grab handle according to one of Claims 1 to 3, **characterized in that** joints (18, 19, 20), preferably in the form of film hinges, are provided on the handle-part fastening points (8, 9) and/or in at least one central region (17) of the handle part (10).

5. Vehicle with a roof grab handle according to Claim 4, **characterized in that**, when the cabriolet roof (2) is closed, the distance between the handle-part fastening points (8, 9) is somewhat smaller than the extended length of the handle part (10), so that, in the operative position (15), the handle part (10) has a bow-shape pointing into the vehicle interior.

6. Vehicle with a roof grab handle according to Claim 4 or Claim 5, **characterized in that** the joints (18, 19, 20), preferably in the form of film hinges, and/or the handle part (10) is/are configured by the provision of preferential directions of deformation in such a manner that, during opening of the cabriolet roof (2) and an associated curvature of the handle part (10), a bow-shape is formed in each case in the direction of the outside of the roof to provide a curvature into the folding region of the roof crossways (14), and **in that**, during closure of the cabriolet roof (2), the preferably original bow-shape of the operative position (15) is re-established.

7. Vehicle with a roof grab handle according to one of Claims 1 to 6, **characterized in that** the handle part (10) is designed in the manner of a flat band, the flat sides pointing in the direction of curvature.

8. Vehicle with a roof grab handle according to one of Claims 1 to 7, **characterized in that** the handle part (10) has a core made of nylon fabric which is encased in plastic.

## Revendications

1. Véhicule avec poignée de toit, **caractérisé en ce que** le véhicule présente un toit réalisé sous la forme d'un toit ouvrant et repliable de cabriolet (2), **en ce que** la poignée de toit comprend une pièce de poignée (10) élastiquement déformable qui est reliée des deux côtés à une structure latérale du toit de cabriolet à des emplacements (8, 9) de fixation de la pièce de poignée, **en ce que** lors de son ouverture, le toit de cabriolet (2) peut être repoussé au moins entre les emplacements (8, 9) de fixation de la pièce de poignée en diminuant l'écartement de ceux-ci et peut être replié en une ondulation transversale (14) du toit qui s'étend transversalement par rapport au sens de la longueur du véhicule et qui est bombée vers le côté extérieur du toit et **en ce que** lors de l'ouverture du toit de cabriolet (2), la pièce de poignée élastique (10) peut être déformée vers l'intérieur de la zone de pliage de l'ondulation transversale (14) du toit depuis une position d'utilisation (15) jusque dans une position bombée de non-utilisation (16) par le movement forcé opposée des emplacements (8, 9) de fixation de la pièce de poignée dans laquelle elle peut être logée.

2. Véhicule avec poignée de toit selon la revendication 1, **caractérisé en ce que** le toit de cabriolet (2) présente des tringles longitudinales (6) et/ou des verrous transversaux (7) reliés de manière articulée et à distance l'un de l'autre qui sont reliés à au moins une bande de matière qui sert de peau de toit et sont recouverts par elle, et **en ce que** les emplacements (8, 9) de fixation de la pièce de poignée sont situés sur des tringles longitudinales (6) et/ou sur des verrous transversaux (7).

3. Véhicule avec poignée de toit selon la revendication 1 ou la revendication 2, **caractérisé en ce que** le toit de cabriolet (2) est réalisé en deux couches, avec une peau extérieure (4) et une peau intérieure (5) et **en ce que** lors de l'ouverture du toit de cabriolet (2), tant la peau extérieure (4) que la peau intérieure (5) se replient et **en ce que** la pièce de poignée (10) et ses emplacements (8, 9) de fixation de pièce de poignée sont situés en dessous de la peau intérieure (5).

4. Véhicule avec poignée de toit selon l'une des revendications 1 à 3, **caractérisé en ce que** des articulations (18, 19, 20), de préférence sous la forme de charnières pelliculaires, sont prévues sur les emplacements (8, 9) de fixation de la pièce de poignée et/ou dans au moins une zone centrale (17) de la pièce de poignée (10).

5. Véhicule avec poignée de toit selon la revendication 4, **caractérisé en ce que** lorsque le toit de cabriolet (2) est fermé, la distance entre les emplacements (8, 9) de fixation de la pièce de poignée est légèrement inférieure à la longueur de la pièce de poignée (10) étendue, de sorte qu'en position d'utilisation (15), la pièce de poignée (10) a une forme arquée tournée vers l'espace intérieur du véhicule.

6. Véhicule avec poignée de toit selon la revendication 4 ou la revendication 5, **caractérisé en ce que** les articulations (18, 19, 20), de préférence sous la forme de charnières pelliculaires, et/ou la pièce de poignée (10), par des dispositifs de déformation préférentielle, sont conçues de telle sorte que lors de l'ouverture du toit de cabriolet (2) et lors d'un bombage de la pièce de poignée (10) qui y est associé, il se forme dans tous les cas un arc en direction du côté extérieur du toit pour permettre un bombage dans la zone de pliage de l'ondulation transversale (14) du toit, et **en ce que** lors de la fermeture du toit de cabriolet (2), la forme éventuellement initialement arquée de la position d'utilisation (15) se rétablit.

7. Véhicule avec poignée de toit selon l'une des revendications 1 à 6, **caractérisé en ce que** la pièce de poignée (10) est réalisée sous forme de bande plane dont les côtés plats sont orientés dans direction du bombage.

8. Véhicule avec poignée de toit selon l'une des revendications 1 à 7, **caractérisé en ce que** la pièce de poignée (10) présente une âme en tissu de Nylon enveloppée dans une matière synthétique.
